# EUROPÄISCHE PATENTSCHRIFT

(11) **EP 1 106 899 B1**
(45) Veröffentlichungstag und Bekanntmachung des Hinweises auf die Patenterteilung: **26.10.2005**
(21) Anmeldenummer: 00126130.4
(22) Anmeldetag: 30.11.2000
(51) Int. Cl.: F16L 47/00

(54) **Rohrleitungselement mit einer Anschlussfläche zum Verbinden mit einem anderen Rohrleitungselement**
Pipe section provided with a coupling surface for connecting it to another pipe section
Elément de conduite avec une surface d'accouplement pour la connexion à un autre élément de conduite

(30) Priorität: 30.11.1999 DE 19957601
(43) Veröffentlichungstag der Anmeldung: 13.06.2001
(73) Patentinhaber: Uponor Innovation AB, 513 81 Fristad (SE)
(72) Erfinder: Brägelmann, Peter, 48607 Ochtrup (DE)
(74) Vertreter: Hilleringmann, Jochen

(56) Entgegenhaltungen:
- EP-A- 0 443 608
- DE-U- 8 406 562
- DE-U- 8 800 282
- GB-A- 2 273 537

## Beschreibung

Die Erfindung betrifft ein Rohrleitungselement mit einer Anschlussfläche, mittels derer das Rohrleitungselement sich mit einem anderen Rohrleitungselement, insbesondere einem Rohrleitungselement eines anderen Leitungssystems verbinden lässt.

Im Bereich der Gebäudeinstallations- und -heizungstechnik existieren im Markt verschiedene Systeme auf Kunststoff- und/oder Metallbasis. Dabei ist festzustellen, dass in den letzten Jahren Systeme mit Kunststofffittingen eine immer größere Bedeutung erlangen. Sämtlichen Systemen gemein ist die Forderung, dass die Möglichkeit der Verbindung der Komponenten der Systeme mit den Komponenten der jeweils anderen Systeme gegeben sein muss. So müssen also die Rohrleitungselemente und insbesondere die Fittinge eines Systems eine Anschlussfläche aufweisen, über die sie mit den Rohrleitungselementen eines anderen Systems verbunden werden können.

Für die Verbindung der Rohrleitungselemente unterschiedlicher Systeme hat sich im wesentlichen die Verbindung mittels Gewinden etabliert. Als problematisch stellt sich hierbei die Ausführung solcher Gewinde an den Kunststoff-Rohrleitungselementen dar. Bislang wurden bei den Entwicklungen folgende Ideen verfolgt:
A) Die Gewinde werden unmittelbar aus dem Kunststoffmaterial des Fittings geformt. Dieses Vorgehen hat den Nachteil, dass häufig die Scherfestigkeit des Kunststoffmaterials nicht ausreichend ist. Da häufig auf zylindrisch/konische Gewindepaarungen zurückgegriffen wird, entstehen mitunter recht hohe Druckkräfte, die insbesondere bei Innengewinden als kritisch zu betrachten sind. Hinzu kommt, dass selbstdichtende Gewinde aus Kunststoff nach der DVGW nicht zugelassen sind.
B) Alternativ zur Ausbildung der Gewinde aus Kunststoff werden zumeist metallische Einsätze in den Rohrleitungselementen benutzt, die mit dem Gewinde versehen sind. Dies hat den Vorteil, dass Scherkräfte durch die metallische Ausführung der Gewinde besser aufgenommen werden können. Die Kombination aus Kunststoff-Grundkörper und Metalleinsatz ist insbesondere bei der Verwendung von teilkristallinen Werkstoffen, wie z.B. Polypropylen bereits erprobt, erfordert allerdings einen relativ hohen herstellungstechnischen Aufwand. Bei einer Vielzahl von Hochtemperaturthermoplasten dagegen ist der zuvor beschriebene Weg nicht gangbar. Hier zeigt die Praxis, dass in Abhängigkeit vom Werkstoff bei Belastungen eine Ablösung zwischen dem Grundstoffkörper und dem metallischen Einsatz eintritt, die im ungünstigsten Fall zum Mediumaustritt führen kann. Diese Probleme werden gegenwärtig durch die Verlagerung einer die beiden miteinander zu kombinierenden Rohrleitungselemente abdichtenden Dichtfläche vor oder hinter das Gewinde umgangen.
C) Eine weitere Möglichkeit besteht darin, Einlegeteile aus Kunststoff mit einer höheren Scherfestigkeit in den Grundkörper zu integrieren oder den Grundkörper des Rohrleitungselements unmittelbar als ZweiKomponenten-Ausführung zu gestalten.

Die Erfindung befasst sich mit der Ausgestaltung von Rohrleitungselementen mit einem Kunststoff-Grundkörper und einem die Anschlussfläche tragenden Einsatz- oder Anschlusskörper aus einem vom Kunststoffmaterial des Grundkörpers verschiedenen Material, bei dem es sich insbesondere um ein Metall oder eine Metalllegierung handelt.

Aus DE 26 26 302 A1 ist ein Rohrleitungselement mit einer Anschlussfläche zum Verbinden mit einem anderen Rohrleitungselement mit einem Grundkörper aus einem Kunststoffmaterial und einem Anschlusskörper aus einem anderen Material als dem des Grundkörpers bekannt. Hierbei weist der Anschlusskörper die Anschlussfläche für die Verbindung zu einem anderen Rohrleitungselement auf. Der Anschlusskörper und der Grundkörper weisen Grenzflächen auf, entlang derer beide aneinander liegen. Mindestens eine der Grenzflächen von Anschlusskörper und Grundkörper weist mindestens eine Aufnahmenut auf, wobei in der Aufnahmenut mindestens ein Dichtelement aus einem elastischen Material angeordnet ist.

Aus der ein Übergangsstück in einer Gasleitung betreffenden DE 84 06 562 U1 ist ein Rohrleitungselement der vorstehenden Art bekannt, bei dem das Dichtelement mit einer Vorspannung an den Grenzflächen von Anschlusskörper und Grundkörper anliegt.

Ferner ist in EP-A-0 443 608 eine Flachdichtung mit einem tragenden Teil aus elastomerem Material und mit einem von diesem getragenen weiteren Teil aus einem bei Kontakt mit Wasser expandierenden Material beschrieben.

Der Erfindung liegt die Aufgabe zugrunde, ein solches Rohrleitungselement dahingehend zu verbessern, dass eine Leckage entlang der sich berührenden Grenzflächen von Grundkörper und Anschlusskörper zuverlässig vermieden wird.

Zur Lösung dieser Aufgabe wird mit der Erfindung ein Rohrleitungselement mit einer Anschlussfläche zum Verbinden mit einem anderen Rohrleitungselement vorgeschlagen, wobei das Rohrleitungselement erfindungsgemäß mit den Merkmalen des Anspruchs 1 versehen ist. Die Merkmale einzelner Ausgestaltungen der Erfindung sind in den Unteransprüchen angegeben.

Nach der Erfindung befindet sich zwischen dem Anschlusskörper und dem Grundkörper mindestens ein erstes Dichtelement, das aus einem kompressiblen Material besteht und/oder aufgrund seiner Konstruktion kompressibel ist und mit Vorspannung in einer Aufnahmenut angeordnet ist, die vorzugsweise in dem Anschlusskörper ausgebildet ist, genauso gut aber auch in dem Grundkörper angeordnet sein und/oder sich über Grundkörper und Anschlusskörper erstrecken kann. Mindestens eine derartige Aufnahmenut ist im Bereich mindestens einer Grenzfläche von Anschlusskörper und Grundkörper vorgesehen. Von der einen bzw. jeder Aufnahmenut können auch mehrere Dichtelemente aufgenommen sein. Aufgrund seiner Vorspannung drückt das erste Dichtelement sowohl gegen den Anschlusskörper als auch gegen den Grundkörper. Sollte es im Laufe der Zeit zu einer mikroskopischen Ablösung der Grenzflächen von Anschlusskörper und Grundkörper kommen (Entstehung einer Kapillaren), so folgt das erste Dichtelement aufgrund seiner Vorspannung dieser Bewegung entsprechend, da es infolge seiner Kompression expandieren wird. Damit sind die Grenzflächen von Anschlusskörper und Grundkörper stets abgedichtet, so dass Medienaustritt verhindert wird.

In den axialen Endbereichen weist das Dichtelement erfindungsgemäß eine geringere Kompressibilität auf, was entweder konstruktiv oder materialbedingt oder aus einer Kombination von beiden herrührt. Insbesondere sind diese Stirnenden des Dichtelements mit einem größeren Rundungsradius als der Rundungsradius zwischen den Flanken und dem Grund der das Dichtelement aufnehmenden Aufnahmenut versehen. Hierdurch kommt es zu einer erhöhten Flächenpressung, was die Dichtfunktion des Dichtelements verbessert.

Zusätzlich ist erfindungsgemäß in der Aufnahmenut oder in einer separaten Aufnahmenut ein zweites Dichtelement aus einem bei Aufnahme von Feuchtigkeit expandierenden Material angeordnet. In dem Augenblick, in dem dieses Dichtelement aufgrund einer sich zwischen den Grenzflächen bildenden Kapillaren mit Feuchtigkeit in Kontakt gelangt, quillt es auf (expandiert), so dass es mit einer Andrückkraft an dem Anschlusskörper und dem Grundkörper anliegt und somit den Medienaustritt verhindert. Damit weist das erfindungsgemäße Rohrleitungselement entweder den ersten oder den zweiten Dichtelement-Typ oder zumindest zwei unterschiedliche Dichtelement-Typen auf.

In vorteilhafter Weiterildung der Erfindung ist vorgesehen, das erste Dichtelement (nachfolgend der Einfachheit halber als "das Dichtelement" bezeichnet) als (Band-)Ringelement mit einer radial innenliegenden und einer radial außenliegenden Anlagefläche zur Anlage an den Grenzflächen von Anschlusskörper und Grundkörper auszubilden. Die Stirnenden des ersten Dichtelements sind vorzugsweise gerundet ausgebildet, wobei der Radius dieser Rundungen größer ist als der Radius zwischen den Flanken und dem Grund der das erste Dichtelement aufnehmenden Aufnahmenut. Dies hat den Vorteil, dass das Dichtelement mit maximaler Flächenpressung an den Flanken und dem Grund der Aufnahmenut anliegt.

Das Dichtelement kann ein eingebettetes Versteifungselement (Seele) aufweisen, um dem Dichtelement eine größere mechanische Stabilität zu verleihen. Dies ist im Hinblick auf die Dichtfunktion von Vorteil.

In weiterer vorteilhafter Ausgestaltung der Erfindung weist das Dichtelement an einer seiner Auflageflächen vorstehende insbesondere im Querschnitt dreieckförmige Rippen mit dazwischenliegenden ebenfalls insbesondere dreieckförmigen Nuten auf. Diese Rippen/Nuten-Ausbildung ist insbesondere im mittleren Bereich der Anlagefläche des Dichtelements ausgebildet und setzt die Kompressibilität herauf, da weniger Dichtmaterial vorhanden ist. Das Dichtelement verformt sich also in seinem mittleren Bereich in Richtung auf denjenigen Teil (Grundkörper oder Anschlusskörper), an dem die mit den Rippen und Nuten versehene Anlagefläche anliegt. Die nach Art von Dichtlamellen ausgebildete Anlagefläche schmiegt sich dabei an den betreffenden Körper an und dichtet somit zuverlässiger ab. Der Anschlusskörper ist zweckmäßigerweise gegen axiale und rotatorische Krafteinwirkungen gesichert am Grundkörper verankert. Mit anderen Worten ist die Grenzflächenverbindung beider Körper kraftschlüssig ausgeführt. Dieser Kraftschluss kann beispielsweise stoffschlüssig ausgeführt sein, indem die Grenzflächen miteinander verschweißt oder verklebt sind. Eine Alternative hierzu bildet der Reibschluss, bei dem der Grundkörper und der Anschlusskörper durch eine Presspassung miteinander verbunden sind. Eine letzte Alternative für einen kraftschlüssigen Verbund von Anschlusskörper und Grundkörper besteht in einer formschlüssigen Verbindung von beiden, indem beide Grenzflächen mit in ihrer Form korrespondierenden, ineinandergreifenden Vorsprüngen und Vertiefungen versehen sind.

In vorteilhafter Weiterbildung der Erfindung ist ferner vorgesehen, dass der Anschlusskörper nicht nur an seiner Außen- oder nur an seiner Innenseite mit dem Material des Grundkörpers in Kontakt steht, sondern dass der Grundkörper den Anschlusskörper an zwei einander gegenüberliegenden Seiten zumindest teilweise umfasst. Diese beiden Seiten des Anschlusskörpers sind dabei mit Vorsprüngen oder Vertiefungen versehen, in die korrespondierende Vorsprünge oder Vertiefungen des Grundkörpers eingreifen. Insoweit wird der Anschlusskörper also vom Grundkörper an zwei gegenüberliegenden Seiten formschlüssig gehalten. So ist es beispielsweise denkbar, dass der beispielsweise als Hülse mit Innengewinde ausgebildete Anschlusskörper an seiner Außenseite Vorsprünge aufweist, die als umlaufende Rippen ausgebildet sind und voneinander beabstandet auf der gesamten Außenseite verteilt angeordnet sind. Ein derartiger Anschlusskörper weist dann vorzugsweise auch im Bereich seines einen axialen Endes auf der Innenseite mindestens einen Vorsprung bzw. eine Vertiefung auf, damit auch in diesem Teilbereich der Innenseite des Anschlusskörpers es zu einem Formschluss und damit zu einer beidseitigen Umgreifung des Anschlusskörpers durch das Material des Grundkörpers kommt. Ein derart ausgebildeter Anschlusskörper wird zuverlässig gegen axiale Kräfte gesichert am Grundkörper gehalten.

Wie vorstehend beschrieben, ist die Anschlussfläche des Anschlusskörpers insbesondere mit einem Gewinde versehen. Gewinde werden heutzutage bevorzugt eingesetzt, um die Rohrleitungselemente unterschiedlicher Systeme untereinander verbinden zu können. Aber auch andere Möglichkeiten der Kupplung der Rohrleitungselemente unterschiedlicher Systeme sind denkbar, so beispielsweise Bajonettverschlüsse, Schweißverbindungen oder Pressverbindungen. Die Gewindeverbindung hat den Vorteil, dass sie dann, wenn sie in Metall ausgeführt ist, als selbstdichtende Gewindeverbindung nach DVGW zugelassen ist (und zwar dann, wenn eine zylindrische/konische Gewindepaarung vorgesehen ist). Auf spezielle Dichtelemente im Gewindeverbindungsbereich kann also verzichtet werden.

Wie eingangs erwähnt, befindet sich das Dichtelement bei dem erfindungsgemäßen Rohrleitungselement in einem vorgespannten Zustand und liegt damit mit einer Mindestandrückkraft sowohl am Anschlusskörper als auch am Grundkörper an. Das erfindungsgemäße Rohrleitungselement lässt sich vorzugsweise als Umspritz-Kunststoffteil realisieren, wobei der Grundkörper aus einem Kunststoffmaterial besteht, das um bzw. an den Anschlusskörper angespritzt ist. Dabei wird der Anschlusskörper zusammen mit dem Dichtelement in die Spritzgussform eingelegt und das Kunststoffmaterial um bzw. an den Anschlusskörper gespritzt. Hierbei kann nun der Füll- bzw. Nachpressdruck des flüssigen Kunststoffmaterials zur Erzeugung der Vorspannung des Dichtelements eingesetzt werden. Der Druck, unter dem das Kunststoffmaterial während seiner Erhärtung in der Spritzgussform steht, komprimiert also das Dichtelement, wodurch dieses die erforderliche Andrückkraft zur dichtenden Anlage sowohl an dem Grundkörper als auch an dem Anschlusskörper erzeugen kann. Durch entsprechende Ausbildung des Dichtelements, insbesondere durch Anbringung von schrägverlaufenden Vorsprüngen auf der dem Grundkörper zugewandten Seite des Dichtelements ist es möglich, den Kunststoff-Schmelzefluss beim Füllen der Spritzgussform zum Andrücken des Dichtelements gegen den Anschlusskörper auszunutzen. Diese nach Art von Lamellen verlaufenden Vorsprünge weisen dabei in Richtung des Schmelzeflusses, wodurch sie aufgrund der Fließbewegung in Richtung auf den Anschlusskörper umgelegt werden, so dass das Dichtelement eine erhöhte Andrückkraft in Richtung des Anschlusskörpers erhält, die dann im erstarrten Zustand der Kunststoffmasse auch als Andrückkraft gegen den Grundkörper wirkt.

Das erfindungsgemäße Rohrleitungselement weist insbesondere einen Grundkörper aus einem hochtemperaturbeständigen Kunststoffmaterial, insbesondere aus PSU, PPSU, PMMA, ABS, PS, PC auf, während der Anschlusskörper vorzugsweise aus einem Metall oder einer Metalllegierung oder einem Kunststoffmaterial besteht. Ein derartiges Rohrleitungselement dient dann beispielsweise als Übergangsstück von einem Kunststoff-System zu einem Metall-System, in dem ein Metall-Rohrleitungselement mit dem ebenfalls aus Metall bestehenden Anschlusskörper gekuppelt werden kann.

Nachfolgend werden anhand der Figuren Ausführungsbeispiele der Erfindung näher erläutert. Im einzelnen zeigen:
- Fig. 1: ein auch als Wandscheibe bezeichnetes Rohrleitungselement eines Kunststoff-Leitungssystems, das erfindungsgemäß ausgebildet ist und an dem sich ein Metall-Rohrleitungselement festschrauben lässt,
- Fig. 2: einen Schnitt durch den Bereich II des Kunststoff-Rohrleitungselements nach Fig. 1 in vergrößertem Maßstab, wobei die Abdichtung des Metall-Anschlusskörpers und des Kunststoff-Grundkörpers gemäß einem ersten Ausführungsbeispiel realisiert ist, und
- Fign. 3 und 4: vergrößerte Querschnitts-Teilansichten des Bereichs III der Fig. 2 zur Verdeutlichung der Ausgestaltung zweier alternativer Ausbildungen des zur Abdichtung des Metall-Anschlusskörpers gegenüber dem Kunststoff-Grundkörper eingesetzten Dichtelements.

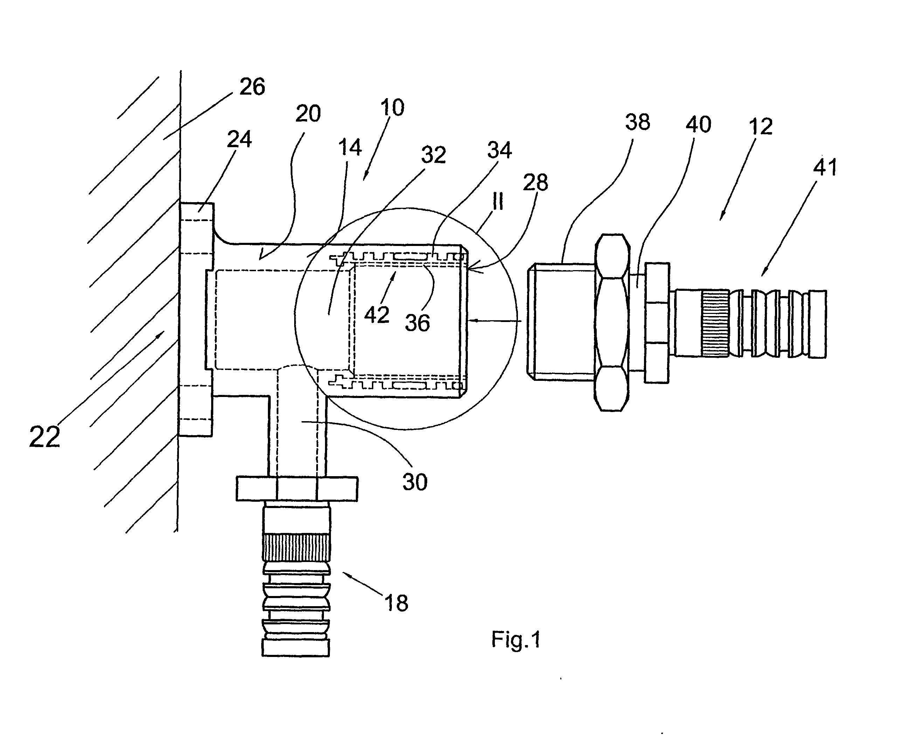

Fig. 1 zeigt zwei Rohrleitungselemente 10,12, die als Pressfittinge ausgebildet sind und zu unterschiedlichen Leitungssystemen gehören. So handelt es sich bei dem Rohrleitungselement 10 um einen Kunststofffitting mit einem Kunststoff-Grundkörper 14, der als Winkelrohrelement ausgebildet ist. An dem Grundkörper 14 befindet sich eine Stützhülse 18 aus Kunststoff, auf die ein Kunststoffrohr bzw. Kunststoff-Metall-Verbundrohr aufpressbar ist. Der Grundkörper 14 weist ein Rohrstück 20 auf, von dem der Stützkörper 18 radial absteht und das an einem Ende 22 verschlossen ist. An diesem Ende 22 weist das Rohrstück 20 einen Flansch 24 auf, mit dem das Rohrstück 20 und damit das gesamte Rohrleitungselement 10 an einer Wand 26 befestigbar ist. Das dem verschlossenen Ende 22 gegenüberliegende Ende 28 des Rohrstücks 20 ist offen und dient der Aufnahme des Fitting-Rohrleitungselements 12. Durch die Kunststoff-Stützhülse 18 und das Kunststoff-Rohrstück 20 erstrecken sich Durchlässe 30,32, die untereinander in Verbindung stehen. In das offene Ende 28 des Rohrstücks 20 des Grundkörpers 14 ist ein Metall-Anschlusskörper 34 eingesetzt, der ein Innengewinde 36 aufweist, mit dem das Außengewinde 38 an dem Fittingkörper 40 des Fitting-Rohrleitungselements 12 verschraubbar ist. Der Fittingkörper 40 weist eine Stützhülse 41 auf, auf die ein Rohr aufpressbar ist.

Mit den beiden Rohrleitungselementen 10,12 gemäß Fig. 1 lässt sich ein Übergang zwischen einem Kunststofffittingsystem zu einem Metallfittingsystem realisieren. Da das Kunststoffmaterial des Grundkörpers 14 des Rohrleitungselements 10 keine ausreichende Scherfestigkeit aufweist, erfolgt die Schraubverbindung zum aus Metall bestehenden Fitting-Rohrleitungselement 12 durch den in dem Grundkörper 14 eingebetteten Metall-Anschlusskörper 34, der sozusagen die Anschlussfläche 42 zum Anschließen des aus Metall bestehenden Fitting-Rohrleitungselements 12 bildet. Diese Anschlussfläche 42 ist in diesem Fall als Innengewinde 36 ausgebildet, das dann mit dem Außengewinde 38 des Fitting-Rohrleitungselements 12 zusammenwirkt. Ebenso ist es aber auch denkbar, dass der Metall-Anschlusskörper 34 außen am Rohrleitungselement 10 angeordnet ist und dann ein Außengewinde aufweist, das mit einem Innengewinde eines mit dem Rohrleitungselement 10 verschraubbaren Rohrleitungselements versehen ist.

Als Material für den Grundkörper 14 kommt ein hochtemperaturfester amorpher Kunststoff, wie beispielsweise PSU oder PPSU in Frage, der DVGW zugelassen ist. Ebenso bestehen der Metall-Anschlusskörper 34 sowie das Fitting-Rohrleitungselement 12 aus einem Metall bzw. Metalllegierung, das bzw. die ebenfalls nach DVGW zugelassen ist.

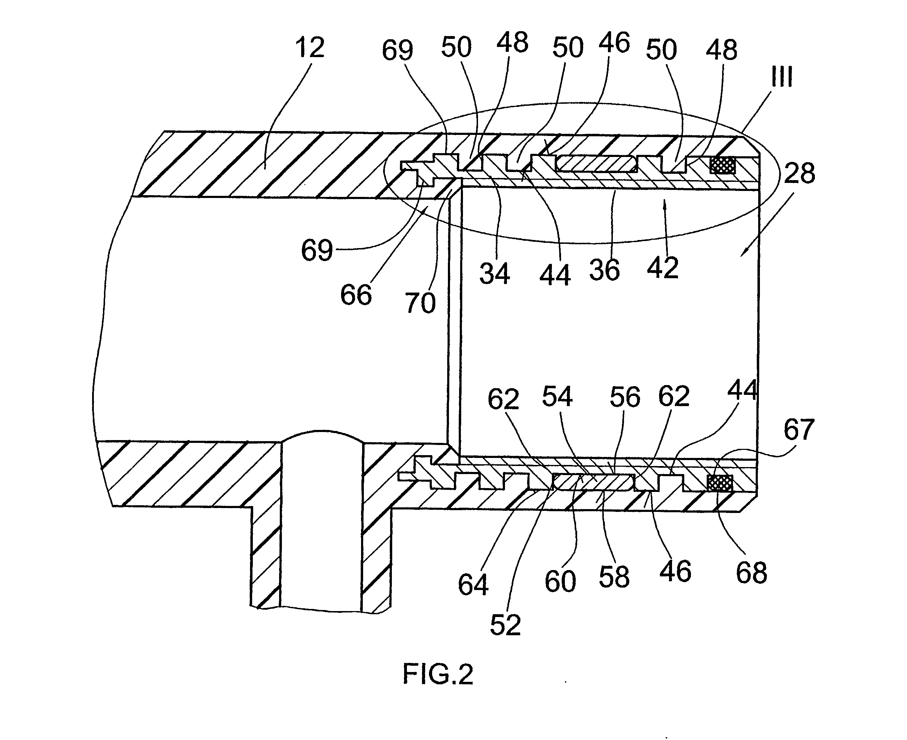

Anhand von Fig. 2 wird nachfolgend genauer auf die Abdichtung des Grundkörpers 14 gegenüber dem Metall-Anschlusskörper 34 des Rohrleitungselements 10 eingegangen. Beide Körper 14,34 liegen entlang von Grenzflächen 44,46 aneinander. In der Grenzfläche 46 des Metall-Anschlusskörpers 34 sind mehrere in Umfangsrichtung umlaufende Nuten 48 eingearbeitet, in die Vorsprünge 50 des Grundkörpers 14 eingreifen. Darüber hinaus weist der Metall-Anschlusskörper 34 eine weitere außenliegende (Aufnahme-)Nut 52 auf, in der sich ein ringförmiges Dichtelement 54 befindet. Das Dichtelement 54 besteht aus einem Dichtwerkstoff, der einen niedrigeren E-Modul aufweist als das Kunststoffmaterial des Grundkörpers 14. Das Dichtelement 54 ist nach Art eines Bandringes ausgebildet und weist eine innenliegende Anlagefläche 56 sowie eine außenliegende Anlagefläche 58 auf. Die innenliegende Anlagefläche 56 liegt dabei an dem Grund 60 der Aufnahmenut 52 an, während die außenliegende Anlagefläche 58 an der Grenzfläche 44 des Grundkörpers 14 anliegt. An den axialen Stirnenden 62 liegt das Dichtelement 54 an den Flanken 64 der Aufnahmenut 52 an.

Das Dichtelement 54 befindet sich unter Vorspannung und drückt damit mit einer gewissen Andrückkraft an seinen Anlageflächen 56,58 gegen den Metall-Anschlusskörper 34 bzw. den Grundkörper 14. Durch die Vorspannung bleiben die Anlageflächen 56,58 des Dichtelements 54 auch dann an den Grenzflächen 44,46 in Anlage, wenn sich zwischen den Grenzflächen im Laufe der Zeit, wenn auch nur im mikroskopischen Maßstab, Ablösungen (Kapillare) einstellen. Damit ist die Verbindung zwischen dem Grundkörper 14 aus Kunststoff und dem Anschlusskörper 34 aus Metall über die gesamte Betriebsdauer des Rohrleitungselements 10 mediendicht.

Zusätzlich ist in einer weiteren außenliegenden (Aufnahme-)Nut 67 des Metall-Anschlusskörpers 34 ein zweites Dichtelement 68 angeordnet, das aus einem bei Kontakt mit Feuchtigkeit expandierenden Dichtmaterial besteht. Dieses zweite Dichtelement 68 sichert die Grenzschicht zwischen dem Grundkörper 14 und dem Metall-Anschlusskörper 34 in dem Fall ab, dass das Dichtelement 54 aus welchen Gründen auch immer nicht vollständig abdichten sollte (zusätzliche Abdichtungssicherheit).

Durch die ineinandergreifenden Nuten 48 und Vorsprünge 50 kommt es zwischen dem Metall-Anschlusskörper 34 und dem Grundkörper 14 zu einer bezüglich axialer Kräfte kraftschlüssigen Verbindung durch Formschluss. Wie anhand der Figuren zu erkennen ist, ist das innenliegende axiale Ende 66 des im wesentlichen hülsenförmigen Anschlusskörpers 34 sowohl an der Außen- als auch an der Innenseite vom Material des Grundkörpers 14 umschlossen. Sowohl auf der Außenseite als auch auf der Innenseite weist der Metall-Anschlusskörper 34 Vorsprünge 69 auf, wobei der Vorsprung 69 auf der Innenseite von einem Vorsprung 70 des Grundkörpers 14 umgriffen ist. Am innenliegenden Ende 66 des Anschlusskörpers 34 wird dessen Grenzfläche 46 einerseits von der Außenseite als auch von der Innenseite des Anschlusskörpers 34 gebildet. Genauso wird in diesem Bereich die Grenzfläche 44 des Grundkörpers 14 von dessen radial einwärts gerichteten Flächenabschnitt und dem Flächenabschnitt im Bereich des Vorsprungs 70 gebildet.

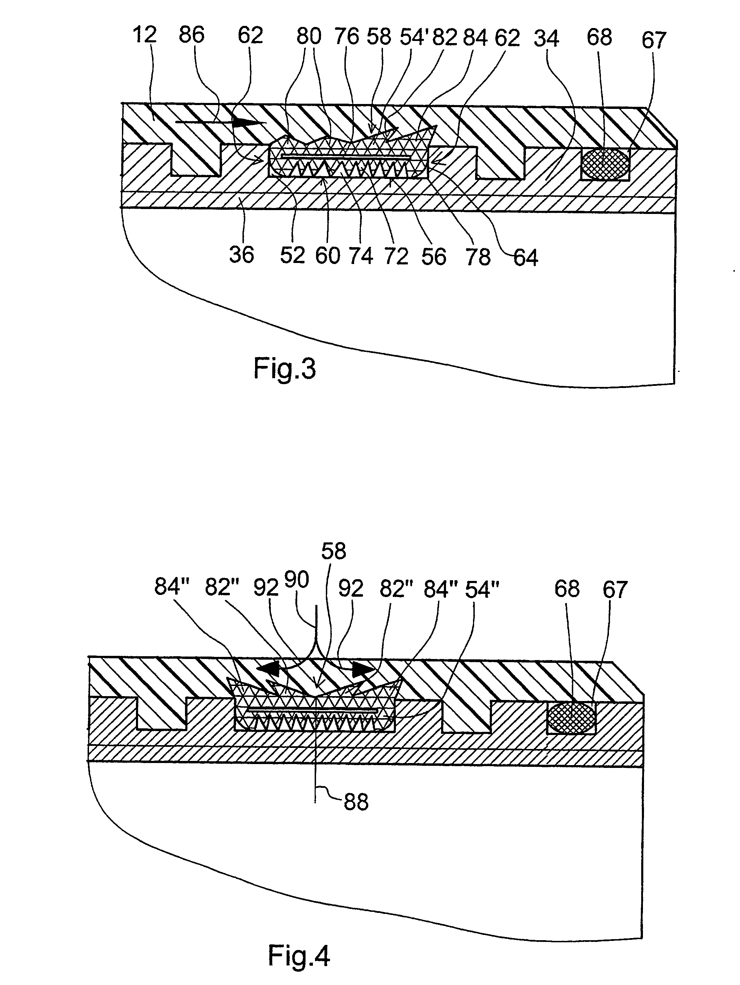

Fign. 3 und 4 zeigen alternative Ausgestaltungen von Dichtelementen 54',54". Gemäß Fig. 3 weist das Dichtelement 54' an seiner radial innenliegenden Anlagefläche 56 eine Verzahnung in Form von V-förmigen Rippen 72 mit dazwischenliegenden V-förmigen Nuten 74. Ferner ist das Dichtelement 54' mit einer Versteifungsseele 76 aus insbesondere Metall versehen. An den stirnseitigen Enden 62 weist das Dichtelement 54' einen Rundungsradius auf, der größer ist als der Rundungsradius im Eckenbereich 78 zwischen den Flanken 64 und dem Grund 60 der Aufnahmenut 52 im Metall-Anschlusskörper 34.

Auf der dem Grundkörper 14 zugewandten außenliegenden Anlageseite 58 weist das Dichtelement 54' eine Verzahnung mit flach verlaufenden Vorsprüngen 80 und weiter vorstehenden Vorsprünge 82,84 auf. Diese beiden letztgenannten Vorsprünge 82,84 dienen der Verstärkung der Anlage des Dichtelements 54' sowohl am Grundkörper 14 als auch in der Aufnahmenut 52 des Anschlusskörpers 34. In diesem Zusammenhang sei erwähnt, dass das Rohrleitungselement 10 durch Umspritzen des Anschlusskörpers 34 mit dem Kunststoffmaterial des Grundkörpers 14 hergestellt wird. Die Fließrichtung der Kunststoffschmelze ist in Fig. 3 mit dem Pfeil 86 angedeutet. Zu erkennen ist, dass die Vorsprünge 82,84 in Richtung des Pfeils 86 zur Seite geneigt von der Anlagefläche 58 des Dichtelements 54' abstehen. Fließt nun das Kunststoffmaterial an diesen Vorsprüngen 82,84 vorbei, so wird auf diese eine Biegekraft in Richtung des Anschlusskörpers 34 ausgeübt. Dadurch wird die Kompressibilität des Dichtelements 54' weiter erhöht. Ohne eine solche Ausbildung der Anlagefläche 58 (s. das Ausführungsbeispiel gemäß Fig. 2) wird der Füll- bzw. Nachpressdruck der Kunststoffschmelze durch die sich über die Anlagefläche 58 einstellende Anpresskraft in eine Komprimierung des Materials des Dichtelements 54' umgesetzt. Mit den schrägverlaufenden Vorsprüngen 82,84 kann diese Kompression des Dichtelements 54' noch erhöht werden.

Fig. 4 zeigt eine Variante des Dichtelements 54' der Fig. 3. Das Dichtelement 54" von Fig. 4 weist symmetrisch zu einer Mittelebene 88 angeordnete, voneinander weg weisende schrägverlaufende Vorsprünge 82",84" auf, die symmetrisch zu einer Kunststoffschmelzeneinfüllstelle (bei 90 angedeutet) angeordnet sind, über die die Kunststoffschmelze entlang der Pfeile 92 an der Anlagefläche 58 des Dichtelements 54" entlangströmt. Auch hier tritt wieder der Effekt der Erhöhung der Komprimierung des Dichtelements 54" durch Umlegen der Vorsprünge 82",84" ein.

## Patentansprüche

1. Rohrleitungselement mit einer Anschlussfläche zum Verbinden mit einem anderen Rohrleitungselement, mit
- einem Grundkörper (14) aus einem Kunststoffmaterial und
- einem Anschlusskörper (34) aus einem anderen Material als dem des Grundkörpers (14), wobei
- der Anschlusskörper (34) die Anschlussfläche (42) für die Verbindung zu einem anderen Rohrleitungselement (12) aufweist und
- der Anschlusskörper (34) und der Grundkörper (14) Grenzflächen (44,46) aufweisen, entlang derer beide aneinander liegen,
- wobei mindestens eine der Grenzflächen (44,46) von Anschlusskörper (34) und Grundkörper (14) mindestens eine Aufnahmenut (52) aufweist und
- wobei in der Aufnahmenut (52) mindestens ein erstes Dichtelement (54,54',54") aus einem elastischen Material angeordnet ist, das mit einer Vorspannung an den Grenzflächen (44,46) von Anschlusskörper (34) und Grundkörper (14) anliegt,
**dadurch gekennzeichnet,**
- **dass** das erste Dichtelement (54,54',54") an seinen einander abgewandten Stirnenden (62) konstruktiv und/oder materialbedingt eine geringere Kompressibilität aufweist als im Bereich zwischen den Stirnenden und
- **dass** in der Aufnahmenut (52) zusätzlich und/oder in einer zusätzlichen Aufnahmenut (67) mindestens ein zweites Dichtelement (68) aus einem bei Aufnahme von Feuchtigkeit expandierenden Material angeordnet ist, das bei Aufnahme von Feuchtigkeit mit einer Vorspannung an den Grenzflächen (44,46) von Anschlusskörper (34) und Grundkörper (14) anliegt.

2. Rohrleitungselement nach Anspruch 1, **dadurch gekennzeichnet, dass** das erste Dichtelement an seinen einander abgewandten Stirnenden (62) abgerundet ist und dass der Rundungsradius der Stirnenden (62) größer ist als der Rundungsradius zwischen den Flanken (64) und dem Grund (60) der das erste Dichtelement (54,54',54") aufnehmenden Aufnahmenut (52).

3. Rohrleitungselement nach Anspruch 1 oder 2, **dadurch gekennzeichnet, dass** die Aufnahmenut in der Grenzfläche (46) des Anschlusskörpers (34) ausgebildet ist.

4. Rohrleitungselement nach einem der Ansprüche 1 bis 3, **dadurch gekennzeichnet, dass** das erste Dichtelement (54,54',54") als Ringelement mit einer radial innenliegenden und einer radial außenliegenden Anlagefläche (56,58) zur Anlage an den Grenzflächen (44,46) von Anschlusskörper (34) und Grundkörper (14) aufweist.

5. Rohrleitungselement nach einem der Ansprüche 1 bis 4, **dadurch gekennzeichnet, dass** das erste Dichtelement (54,54',54") ein eingebettetes Versteifungselement (76) aufweist.

6. Rohrleitungselement nach einem der Ansprüche 1 bis 5, **dadurch gekennzeichnet, dass** das erste Dichtelement (54,54',54") an einer seiner Anlageflächen (56) umlaufende Rippen (72) mit dazwischenliegenden Nuten (74) aufweist.

7. Rohrleitungselement nach einem der Ansprüche 1 bis 6, **dadurch gekennzeichnet, dass** der Anschlusskörper (34) und der Grundkörper (14) an ihren Grenzflächen (44,46) kraftschlüssig miteinander verbunden sind.

8. Rohrleitungselement nach Anspruch 7, **dadurch gekennzeichnet, dass** der Grundkörper (14) und der Anschlusskörper (34) an den Grenzflächen (44,46) ineinandergreifende Vorsprünge (50) und Vertiefungen (48) aufweist.

9. Rohrleitungselement nach einem der Ansprüche 1 bis 8, **dadurch gekennzeichnet, dass** die Anschlussfläche (42) ein Gewinde (36) aufweist.

10. Rohrleitungselement nach einem der Ansprüche 1 bis 9, **dadurch gekennzeichnet, dass** der Anschlusskörper (34) nach Art einer Hülse eine radial innenliegende Innenseite und eine radial außenliegende Außenseite aufweist und dass die Innenseite die Anschlussfläche (42) und gegebenenfalls einen Teilbereich der Grenzfläche und die Außenseite die Grenzfläche (46) bzw, den anderen Teilbereich der Grenzfläche (46) aufweist.

11. Rohrleitungselement nach einem der Ansprüche 1 bis 9, **dadurch gekennzeichnet, dass** der Anschlusskörper (34) nach Art einer Hülse eine radial innenliegende Innenseite und eine radial außenliegende Außenseite aufweist und dass die Außenseite die Anschlussfläche (42) und gegebenenfalls einen Teilbereich der Grenzfläche (46) und die Innenseite die Grenzfläche (46) bzw. den anderen Teilbereich der Grenzfläche (46) aufweist.

12. Rohrleitungselement nach einem der Ansprüche 1 bis 11, **dadurch gekennzeichnet, dass** der Grundkörper (14) durch Umspritzen und/oder Anspritzen von Kunststoffmaterial um bzw. an den Anschlusskörper (34) hergestellt ist.

13. Rohrleitungselement nach Anspruch 12, **dadurch gekennzeichnet, dass** die Vorspannung des ersten Dichtelements (54,54',54") durch den Füll- bzw. Nachpressdruck des flüssigen Kunststoffmaterials erzeugt ist.

14. Rohrleitungselement nach Anspruch 12 oder 13, **dadurch gekennzeichnet, dass** die an dem Grundkörper (14) anliegende Anlagefläche (58) des ersten Dichtelements (54',54") flexible Vorsprünge (82,84,82",84") aufweist, die schräg in Richtung des beim Spritzgussvorgang an dieser Anlagefläche (58) des ersten Dichtelements (54,54") entlangströmenden Kunststoffmaterialflusses weisen und durch Umlegen in Richtung auf den Anschlusskörper (34) das erste Dichtelement (54',54") gegen diesen drücken.

15. Rohrleitungselement nach einem der Ansprüche 1 bis 14, **dadurch gekennzeichnet, dass** der Grundkörper (14) eine Stützhülse (18) zum Anschließen eines Rohres, insbesondere Kunststoffrohres oder Kunststoff-Metall-Verbundrohres mittels radialer Verpressung des Rohres mit der Stützhülse (18) durch eine Press- oder Schiebehülse aufweist.

16. Rohrleitungselement nach einem der Ansprüche 1 bis 15, **dadurch gekennzeichnet, dass** der Grundkörper (14) aus einem hochtemperaturbeständigen Kunststoffmaterial, insbesondere aus PSU, PPSU, PMMA, ABS, PS, PC besteht und/oder dass der Anschlusskörper (34) aus einem Metall oder einer Metalllegierung besteht.

## Claims

1. A pipe element having a connection face for connection to another pipe element, comprising
- a base body (14) comprising a plastic material, and
- a connection body (34) comprising a different material from the material of the base body (14), wherein
- the connection body (34) comprises the connection face (42) for the connection to another pipe element (12) and
- the connection body (34) and the base body (14) comprise interfaces (44,46) along which said two bodies are in mutual abutment,
- at least one of the interfaces (44,46) of the connection body (34) and the base body (14) comprises at least one receiving groove (52), and
- the receiving groove (52) accommodates at least one first sealing element (54,54',54") made of an elastic material and arranged in biased abutment on the interfaces (44,46) of the connection body (34) and the base body (14),
**characterized in**
- **that** the first sealing element (54,54',54"), on its mutually averted end faces (62), due to its constructional configuration and/or its material, has a smaller compressibility than in the region between the end faces, and
- **that** additionally accommodated in the receiving groove (52) and/or accommodated in an additional receiving groove (67) is at least one second sealing element (68) made of a material which is adapted to expand upon absorption of humidity and which upon absorption of humidity is in biased abutment on the interfaces (44,46) of the connection body (34) and the base body (14).

2. The pipe element according to claim 1, **characterized in that** the first sealing element on its mutually averted end faces (62) is rounded and that the radius of the rounding of the end faces (62) is larger than the radius of rounding between the flanks (64) and the bottom (60) of the receiving groove (52) accommodating the first sealing element (54, 54',54").

3. The pipe element according to claim 1 or 2, **characterized in that** the receiving groove is formed in the interface (46) of the connection body (34).

4. The pipe element according to any one of claims 1 to 3, **characterized in that** the first sealing element (54,54',54") is formed as an annular element comprising a radially inner and a radially outer abutment face (56,58) for abutment on the interfaces (44,46) of the connection body (34) and the base body (14).

5. The pipe element according to any one of claims 1 to 4, **characterized in that** the first sealing element (54,54',54") is provided with an embedded stiffening element (76).

6. The pipe element according to any one of claims 1 to 5, **characterized in that** the first sealing element (54,54',54") has one of its abutment faces (56) provided with surrounding ribs (72) having grooves (74) arranged therebetween.

7. The pipe element according to any one of claims 1 to 6, **characterized in that** the connection body (34) and the base body (14) are connected to each other by force-locking on their interfaces (44,46).

8. The pipe element according to claim 7, **characterized in that** the base body (14) and the connection body (34) have their interfaces (44,46) provided with protrusions (50) and recesses (48) configured for mutual engagement.

9. The pipe element according to any one of claims 1 to 8, **characterized in that** the connection face (42) is provided with a thread (36).

10. The pipe element according to any one of claims 1 to 9, **characterized in that** the connection body (34) comprises, in the manner of a shell, a radially inward inner side and a radially outward outer side and that the inner side comprises the connection face (42) and, if required, a partial region of the interface, and the outer side comprises the interface (46) and the remaining partial region of the interface (46), respectively.

11. The pipe element according to any one of claims 1 to 9, **characterized in that** the connection body (34) comprises, in the manner of a shell, a radially inward inner side and a radially outward outer side and that the outer side comprises the connection face (42) and, if required, a partial region of the interface (46), and the inner side comprises the interface (46) and the remaining partial region of the interface (46), respectively.

12. The pipe element according to any one of claims 1 to 11, **characterized in that** the base body (14) is produced by molding plastic material around the connection body (34) and/or molding molding plastic material to the connection body (34).

13. The pipe element according to claim 12, **characterized in that** the bias of the first sealing element (54,54',54") is generated by the filling pressure or post-pressing pressure of the liquid plastic material.

14. The pipe element according to claim 12 or 13, **characterized in that** the abutment face (58) of the first sealing element (54',54") abutting the base body (14) comprises flexible protrusions (82,84,82",84") which are arranged to point obliquely in the direction of the plastic material flow passing along this abutment face (58) of the first sealing element (54',54") during the injection molding process, and which, by being folded over in the direction towards the connection body (34), press the first sealing element (54',54") against the connection body (34).

15. The pipe element according to any one of claims 1 to 14, **characterized in that** the base body (14) comprises a support shell (18) for connection of a pipe, particularly a plastic pipe or plastic-metal compound pipe, by radially pressing the pipe to the support shell (18) with the aid of a pressing or sliding shell.

16. The pipe element according to any one of claims 1 to 15, **characterized in that** the base body (14) comprises a highly temperature-resistant plastic material, particularly PSU, PPSU, PMMA, ABS, PS, PC and/or that the connection body (34) comprises a metal or metal alloy.

## Revendications

1. Elément de conduite doté d'une surface de raccordement pour la connexion à un autre élément de conduite, comprenant
- un corps de base (14) constitué d'une matière plastique et
- un corps de raccordement (34) constitué d'un matériau différent de celui du corps de base (14), où
- le corps de raccordement (34) présente la surface de raccordement (42) pour la connexion à un autre élément de conduite (12) et
- le corps de raccordement (34) et le corps de base (14) présentent des surfaces de contact (44, 46) le long desquelles ils reposent tous deux l'un contre l'autre,
- au moins l'une des surfaces de contact (44, 46) du corps de raccordement (34) et du corps de base (14) présentant au moins une rainure de réception (52) et
- au moins un premier élément d'étanchéité (54, 54', 54'') constitué d'un matériau élastique étant disposé dans la rainure de réception (52) et reposant avec une précontrainte contre les surfaces de contact (44, 46) du corps de raccordement (34) et du corps de base (14),
**caractérisé en ce que**
- le premier élément d'étanchéité (54, 54', 54'') présente, au niveau de ses extrémités frontales (62) opposées l'une à l'autre, une compressibilité de construction et/ou due au matériau plus faible par rapport à la zone entre les extrémités frontales et
- en supplément dans la rainure de réception (52), et/ou dans une rainure de réception supplémentaire (67), est disposé au moins un deuxième élément d'étanchéité (68) constitué d'un matériau expansible sous l'effet de l'humidité, qui repose après absorption d'humidité avec une précontrainte contre les surfaces de contact (44, 46) du corps de raccordement (34) et du corps de base (14).

2. Elément de conduite selon la revendication 1, **caractérisé en ce que** le premier élément d'étanchéité est arrondi au niveau de ses extrémités frontales (62) opposées l'une à l'autre et le rayon d'arrondi des extrémités frontales (62) est supérieur au rayon d'arrondi entre les flancs (64) et le fond (60) de la rainure de réception recevant le premier élément d'étanchéité (54, 54', 54").

3. Elément de conduite selon la revendication 1 ou 2, **caractérisé en ce que** la rainure de réception est configurée dans la surface de contact (46) du corps de raccordement (34).

4. Elément de conduite selon l'une des revendications 1 à 3, **caractérisé en ce que** le premier élément d'étanchéité (54, 54', 54") présente en tant qu'élément annulaire une surface d'appui située radialement à l'intérieur et une surface d'appui située radialement à l'extérieur (56, 58) pour l'appui contre les surfaces de contact (44, 46) du corps de raccordement (34) et du corps de base (14).

5. Elément de conduite selon l'une des revendications 1 à 4, **caractérisé en ce que** le premier élément d'étanchéité (54, 54', 54") présente un élément de renfort intégré (76).

6. Elément de conduite selon l'une des revendications 1 à 5, **caractérisé en ce que** le premier élément d'étanchéité (54, 54', 54") présente au niveau de l'une de ses surfaces d'appui (56) des nervures périphériques (72) comprenant entre elles des rainures (74).

7. Elément de conduite selon l'une des revendications 1 à 6, **caractérisé en ce que** le corps de raccordement (34) et le corps de base (14) sont reliés entre eux par complémentarité de force au niveau de leurs surfaces de contact (44, 46).

8. Elément de conduite selon la revendication 7, **caractérisé en ce que** le corps de base (14) et le corps de raccordement (34) présentent au niveau des surfaces de contact (44, 46) des saillies (50) et des renfoncements (48) qui s'engagent les uns dans les autres.

9. Elément de conduite selon l'une des revendications 1 à 8, **caractérisé en ce que** la surface de raccordement (42) présente un filetage (36).

10. Elément de conduite selon l'une des revendications 1 à 9, **caractérisé en ce que** le corps de raccordement (34) présente, à la façon d'une douille, une face intérieure située radialement à l'intérieur et une face extérieure située radialement à l'extérieur et la face intérieure présente la surface de raccordement (42) et le cas échéant une zone partielle de la surface de contact tandis que la face extérieure présente la surface de contact (46) ou l'autre zone partielle de la surface de contact (46).

11. Elément de conduite selon l'une des revendications 1 à 9, **caractérisé en ce que** le corps de raccordement (34) présente, à la façon d'une douille, une face intérieure située radialement à l'intérieur et une face extérieure située radialement à l'extérieur et la face extérieure présente la surface de raccordement (42) et le cas échéant une zone partielle de la surface de contact (46) tandis que la face intérieure présente la surface de contact (46) ou l'autre zone partielle de la surface de contact (46).

12. Elément de conduite selon l'une des revendications 1 à 11, **caractérisé en ce que** le corps de base (14) est fabriqué par moulage par injection et/ou injection de matière plastique ou est fabriqué au niveau du corps de raccordement (34).

13. Elément de conduite selon la revendication 12, **caractérisé en ce que** la précontrainte du premier élément d'étanchéité (54, 54', 54'') est générée par la pression de remplissage ou la pression appliquée après moulage de la matière plastique liquide.

14. Elément de conduite selon la revendication 12 ou 13, **caractérisé en ce que** la surface d'appui (58) du premier élément d'étanchéité (54', 54'') reposant contre le corps de base (14) présente des saillies flexibles (82, 84, 82'', 84'') orientées à l'oblique en direction du flux de matière plastique s'écoulant le long de cette surface d'appui (58) du premier élément d'étanchéité (54, 54'') lors du processus de moulage par injection, et, par un changement en direction du corps de raccordement (34), poussent le premier élément d'étanchéité (54', 54'') contre celui-ci.

15. Elément de conduite selon l'une des revendications 1 à 14, **caractérisé en ce que** le corps de base (14) présente une douille de support (18) pour le raccordement d'un tube, en particulier un tube de matière plastique ou un tube composite matière plastique/métal, au moyen d'un pressage radial du tube avec la douille de support (18) par une douille de pressage ou d'insertion.

16. Elément de conduite selon l'une des revendications 1 à 15, **caractérisé en ce que** le corps de base (14) se compose d'une matière plastique résistante aux hautes températures, en particulier du PSU, PPSU, PMMA, ABS, PS, PC, et/ou le corps de raccordement (34) se compose d'un métal ou d'un alliage métallique.
